(19) Europäisches Patentamt
European Patent Office
Office européen des brevets

(11) **EP 4 083 130 A1**

(12) **EUROPEAN PATENT APPLICATION**
published in accordance with Art. 153(4) EPC

(43) Date of publication:
**02.11.2022 Bulletin 2022/44**

(21) Application number: **20906297.5**

(22) Date of filing: **17.09.2020**

(51) International Patent Classification (IPC):
*C08L 1/02* (2006.01)  *C08L 67/00* (2006.01)
*C08L 97/00* (2006.01)  *C08L 101/16* (2006.01)
*C08G 63/16* (2006.01)

(52) Cooperative Patent Classification (CPC):
(C-Sets available)
**B29C 48/40; B29C 48/92; C08L 1/02; C08L 5/14;
C08L 67/02; C08L 97/005; C08L 97/02;
C08L 101/16;** B29C 48/05; B29C 48/08;
B29C 48/09; B29C 48/12; B29C 48/154;
B29C 48/21; B29C 48/305;               (Cont.)

(86) International application number:
**PCT/JP2020/035289**

(87) International publication number:
**WO 2021/131181 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2019 JP 2019238580
27.12.2019 JP 2019238581**

(71) Applicant: **Mitsubishi Chemical Corporation
Chiyoda-ku
Tokyo 100-8251 (JP)**

(72) Inventors:
• **TANAKA, Tomohiko
Tokyo 100-8251 (JP)**
• **MURAKAMI, Ryo
Tokyo 100-8251 (JP)**

(74) Representative: **Hoffmann Eitle
Patent- und Rechtsanwälte PartmbB
Arabellastraße 30
81925 München (DE)**

(54) **DEGRADATION ACCELERATOR FOR BIODEGRADABLE RESIN, BIODEGRADABLE RESIN COMPOSITION, BIODEGRADABLE RESIN MOLDED PRODUCT, AND METHOD FOR PRODUCING DEGRADATION ACCELERATOR FOR BIODEGRADABLE RESIN**

(57) To provide a degradation accelerator suitable for biodegradable resins and a method for producing the degradation accelerator. With the degradation accelerator, the biodegradation rate and biodegradability of biodegradable resins such as aliphatic polyester-based resins, aliphatic-aromatic polyester-based resins, and aliphatic oxycarboxylic acid-based resins can be increased and freely controlled. A degradation accelerator for biodegradable resins, the degradation accelerator comprising: cellulose; hemicellulose; and lignin, wherein the mass ratio of nitrogen to carbon in the degradation accelerator for biodegradable resins is 0.04 or more, and wherein the mass ratio of the content of the hemicellulose to the total content of the cellulose and the lignin is 0.2 or more.

(52) Cooperative Patent Classification (CPC): (Cont.)
Y02W 30/62

C-Sets
**C08L 1/02, C08L 5/14, C08L 97/005;**
**C08L 5/14, C08L 1/02, C08L 97/005;**
**C08L 67/02, C08L 5/14, C08L 97/005, C08L 1/02**

**Description**

Technical Field

The present invention relates to a degradation accelerator capable of facilitating biodegradation of biodegradable resins and to a method for producing the degradation accelerator. The present invention also relates to a biodegradable resin composition containing the degradation accelerator for biodegradable resins and to a biodegradable resin molded product obtained by subjecting the biodegradable resin composition to extrusion molding or injection molding.

Background Art

In recent years, there have been growing concerns about ecological and environmental pollution due to marine disposal of plastic products. In various countries around the world, various regulations are being enacted from the viewpoint of preventing environmental pollution etc. For example, in Europe, regulations and laws that prohibit the use of single-use plastic shopping bags and single-use plastic cups and plates in the retail industry are being enacted. To be exempt from the prohibition of use under these laws, it is necessary to use products that are formed using biomass raw materials in amounts equal to or more than the minimum required biomass contents specified by the laws and can be composted at home (home compostable products). Recently, there is a growing demand for marine biodegradable plastic products that can biodegrade in the ocean when the plastic products flow into the ocean.

Known examples of the biodegradable plastics (resins) include: aliphatic polyesters such as polybutylene terephthalate/adipate (hereinafter abbreviated as PBAT), polylactic acid (hereinafter abbreviated as PLA), polybutylene succinate (hereinafter abbreviated as PBS), and polybutylene succinate/adipate (hereinafter abbreviated as PBSA); and polyhydroxy alkanols (hereinafter abbreviated as PHAs). Examples of the PHAs include poly(3-hydroxybutyrate) (hereinafter referred to as PHB), poly(3-hydroxybutyrate/3-hydroxyvalerate) (hereinafter referred to as PHBV), poly(3-hydroxybutyrate/3-hydroxyhexanoate) (hereinafter referred to as PHBH), and poly(3-hydroxybutyrate/4-hydroxybutyrate).

These resins differ not only in their biodegradation rate and biodegradability but also in mechanical properties such as tensile elongation at break and elastic constants. Therefore, generally, to improve properties such as mechanical strength, resins are combined together or mixed with a subsidiary material or an additive according to their application purposes or use locations.

PTL 1 discloses a method for producing a composite resin composition having good moldability and good mechanical properties. The composite resin composition is a molding material containing a biodegradable resin and a biomass material. In consideration of final disposal treatment after use of the product, the molding material can decompose in landfills, does not remain in the environment, and does not emit harmful substances such as dioxin during incineration. The composite resin composition is produced, for example, by heat-kneading a composition containing 5 to 95% by weight of an aliphatic aromatic polyester (component A), 5 to 95% by weight of a cellulose-, lignocellulose-, or starch-based material (component B), an unsaturated carboxylic acid or a derivative thereof, and an organic peroxide (component C).

PTL 2 discloses a resin composition prepared by adding, to a high-molecular weight aliphatic polyester, a cellulosecontaining plant material such as the epidermis or cortex of a plant, a seed coat material, a nutshell material, sawdust, milling waste, or sugar cane bagasse and also discloses a molded product.

PTL 1: JP2003-221423A
PTL 2: JP2004-503415T

It is necessary that the biodegradation rate and biodegradability of home compostable plastic products and marine biodegradable plastic products be higher than the biodegradation rate of conventional biodegradable resins such as PBAT, PBS, PBSA, PLA, and PHBH under severer conditions than conventional conditions under which biodegradation can occur (for example, a low-temperature environment with a small amount of degradation bacteria). It is also necessary that these plastic products degrade more than the conventional biodegradable resins in the same amount of time.

The mechanical strength of the resin compositions and molded products thereof described in PTL 1 and PTL 2 is improved to some extent. However, no attention is given to their biodegradation rate and biodegradability, and it is unclear that how much the biodegradation rate and biodegradability are actually increased as compared with those of the conventional biodegradable resins. For some additives and subsidiary materials used, the biodegradability deteriorates, and the mechanical strength is not improved.

Summary of Invention

An object of the present invention is to provide a degradation accelerator suitable for biodegradable resins and a method for producing the degradation accelerator. With the degradation accelerator, the biodegradation rate and biodegradability of biodegradable resins such as aliphatic polyester-based resins, aliphatic-aromatic polyester-based resins, and aliphatic oxycarboxylic acid-based resins can be increased and freely controlled. Another object of the invention is to provide a biodegradable resin composition containing the degradation accelerator and a molded product thereof.

The present inventors have focused attention on nitrogen, carbon, and three components including cellulose, hemicellulose, and lignin or on three components including nitrogen free extract, cellulose, and lignin and thought that these components contribute to or are involved in acceleration of degradation of biodegradable resins. The inventors have found that, by adding these compounds to biodegradable resins with the mixing ratio etc. adjusted based on the above idea, their biodegradation rate and biodegradability can be increased to higher than their intrinsic biodegradation rate and biodegradability.

The present invention is summarized in the following [1] to [12].

[1] A degradation accelerator for biodegradable resins, the degradation accelerator comprising: cellulose; hemicellulose; and lignin, wherein the mass ratio of nitrogen to carbon in the degradation accelerator for biodegradable resins is 0.04 or more, and wherein the mass ratio of the content of the hemicellulose to the total content of the cellulose and the lignin is 0.2 or more.

[2] A degradation accelerator for biodegradable resins, the degradation accelerator comprising 20% by mass or more of nitrogen free extract, wherein the total content of cellulose and lignin is 50% by mass or less.

[3] The degradation accelerator for biodegradable resins according to [1] or [2], wherein the content of moisture is less than 5% by mass.

[4] A biodegradable resin composition comprising: from 2 parts by mass to 250 parts by mass inclusive of the degradation accelerator for biodegradable resins according to any one of [1] to [3]; and 100 parts by mass of a biodegradable resin.

[5] The biodegradable resin composition according to [4], wherein the biodegradable resin is at least one selected from the group consisting of an aliphatic polyester-based resin (A), an aliphatic-aromatic polyester-based resin (B), and an aliphatic oxycarboxylic acid-based resin (C).

[6] The biodegradable resin composition according to [5], wherein the aliphatic polyester-based resin (A) contains, as main constituent units, a repeating unit derived from an aliphatic diol and a repeating unit derived from an aliphatic dicarboxylic acid.

[7] The biodegradable resin composition according to [5] or [6], wherein the aliphatic-aromatic polyester-based resin (B) contains, as main constituent units, a repeating unit derived from an aliphatic diol, a repeating unit derived from an aliphatic dicarboxylic acid, and a repeating unit derived from an aromatic dicarboxylic acid.

[8] A biodegradable resin molded product that is an extrusion molded product or an injection molded product of the biodegradable resin composition according to any one of [4] to [7] .

[9] A method for producing a degradation accelerator for biodegradable resins, the method comprising: pulverizing a raw material to obtain a powder; and selecting grains with a prescribed grain size from the powder to thereby obtain a degradation accelerator for biodegradable resins.

[10] The method for producing a degradation accelerator for biodegradable resins according to [9], the method further comprising the step of drying.

[11] The method for producing a degradation accelerator for biodegradable resins according to [9] or [10], wherein the degradation accelerator for biodegradable resins contains cellulose, hemicellulose, and lignin, wherein the mass ratio of nitrogen to carbon in the degradation accelerator for biodegradable resins is 0.04 or more, and wherein the mass ratio of the content of the hemicellulose to the total content of the cellulose and the lignin is 0.2 or more.

[12] The method for producing a degradation accelerator for biodegradable resins according to any one of [9] to [11], wherein the degradation accelerator for biodegradable resins contains 20% by mass or more of nitrogen free extract, and wherein the total content of cellulose and lignin is 50% by mass or less.

Advantageous Effects of Invention

According to the degradation accelerator for biodegradable resins of the present invention, the biodegradation rate and biodegradability of biodegradable resins such as aliphatic polyester-based resins, aliphatic-aromatic polyester-based resins, and aliphatic oxycarboxylic acid-based resins can be increased to higher than their intrinsic biodegradation rate and biodegradability.

With the biodegradable resin composition of the invention containing the degradation accelerator for biodegradable resins of the invention, biodegradable resin molded products with good biodegradability can be provided.

Description of Embodiments

Embodiments of the present invention will be described in detail.

However, the present invention is not limited to the following description and can be embodied in various modified forms without departing from the scope of the invention.

In the present description, an expression including "to" between numerical values or physical property values is used to indicate a range including these values sandwiching "to" therebetween.

[Degradation accelerator for biodegradable resins]

A degradation accelerator for biodegradable resins according to a first aspect of the present invention (hereinafter may be referred to as "the degradation accelerator I of the present invention" contains cellulose, hemicellulose, and lignin as essential components and is characterized in that the mass ratio of nitrogen (elemental nitrogen) to carbon (elemental carbon) (hereinafter may be referred to as the "nitrogen/carbon ratio") in the degradation accelerator for biodegradable resins is 0.04 or more and that the mass ratio of the content of hemicellulose to the total content of cellulose and lignin (hereinafter may be referred to as the "hemicellulose/(cellulose + lignin) ratio") is 0.2 or more.

A degradation accelerator for biodegradable resins according to a second aspect of the present invention (hereinafter may be referred to as "the degradation accelerator II of the invention") contains 20% by mass or more of nitrogen free extract and is characterized in that the total content of cellulose and lignin is 50% by mass or less.

In the following description, the degradation accelerator I of the invention and the degradation accelerator II of the invention are correctively referred to as "the degradation accelerator of the present invention."

<Degradation accelerator I>

In the degradation accelerator I of the invention, the nitrogen/carbon ratio is 0.04 or more. The reason that the degradation accelerator I with a nitrogen/carbon ratio within the above range can facilitate the degradation of biodegradable resins may be as follows.

Microorganisms such as bacteria and fungi that degrade biodegradable resins require nitrogen as well as carbon as nutrient sources. However, biodegradable resins are composed mainly of carbon, oxygen, and hydrogen, and the content of nitrogen is low. Therefore, when microorganisms degrade biodegradable resins, their growth and secretion of degrading enzymes are inhibited because of the lack of nitrogen, and a sufficient biodegradation rate tends not to be obtained.

However, since the degradation accelerator I of the invention contains nitrogen in a certain amount or more relative to the amount of carbon, it is inferred that the degradation accelerator I facilitates the growth of microorganisms and the secretion of degrading enzymes and accelerates the degradation of the biodegradable resins.

The nitrogen/carbon ratio of the degradation accelerator I of the invention is preferably 0.05 or more and more preferably 0.06 or more. No particular limitation is imposed on the upper limit of the nitrogen/carbon ratio, but the nitrogen/carbon ratio is preferably 5 or less. If the nitrogen/carbon ratio exceeds 5, the amount of carbon is insufficient, and the effect obtained may be insufficient.

In the degradation accelerator I of the invention, the mass ratio of the content of hemicellulose to the total content of cellulose and lignin (the (hemicellulose/(cellulose + lignin) ratio) is 0.2 or more. The reason that the degradation accelerator I with a hemicellulose/(cellulose + lignin) ratio within the above range can accelerate the degradation of biodegradable resins may be as follows.

Hemicellulose tends to be degraded/absorbed by microorganisms faster than cellulose and lignin. When the degradation accelerator I of the invention with a hemicellulose/(cellulose + lignin) ratio of 0.2 or more is used for a resin composition, it is inferred that, when the resin composition is released to nature, the degradation of the biodegradable resin is facilitated because the degradation accelerator facilitates the growth of microorganisms particularly in the early stage and causes an increase in surface area.

The hemicellulose/(cellulose + lignin) ratio of the degradation accelerator I of the invention is preferably 0.6 or more and more preferably 1.0 or more. No particular limitation is imposed on the upper limit of the hemicellulose/(cellulose + lignin) ratio, but the ratio is generally 10 or less. This is because, to increase this ratio to 10 or more, it is necessary to remove cellulose and/or lignin contained in raw materials, and this causes an increase in production cost.

In the degradation accelerator I of the invention, the total amount of cellulose, hemicellulose, and lignin contained in 100% by mass of the degradation accelerator I is preferably 5 to 50% by mass and particularly preferably 10 to 45% by mass.

When the degradation accelerator I of the invention contains moisture, it is preferable to dry the degradation accelerator I to reduce the moisture content to less than 5% by mass. Suppose that the moisture content is 5% by mass or more. In this case, when the degradation accelerator I is mixed with a biodegradable resin, the biodegradable resin may be hydrolyzed, and its molecular weight may decrease, so that its mechanical strength may be insufficient.

The contents of nitrogen, carbon, cellulose, hemicellulose, and lignin in the degradation accelerator I of the invention can be measured and computed using methods described later in Examples.

When the degradation accelerator I is obtained using two or more raw materials, the contents of nitrogen, carbon, cellulose, hemicellulose, and lignin can be determined by multiplying the contents of nitrogen, carbon, cellulose, hemicellulose, and lignin in the raw materials by the mixing ratios of the raw materials and summing the products.

<Degradation accelerator II>

The degradation accelerator II of the invention contains 20% by mass or more of nitrogen free extract. The reason that the degradation accelerator with a nitrogen free extract content within the above range can facilitate the degradation of biodegradable resins may be as follows.

The nitrogen free extract is an analysis value generally used in ingredients labels of livestock feed, and a component containing nitrogen free extract is easily degraded and absorbed by microorganisms. Generally, in natural soils and matured composts, the amount of easily decomposable organic materials that microorganisms such as bacteria and fungi can utilize is small, so that the number of microorganisms is small and the activity the degrading enzymes is low.

The degradation accelerator II of the invention contains at least a certain amount of nitrogen free extract. It is therefore inferred that the growth of the microorganisms and the activation of the degrading enzymes are facilitated, so that the degradation of biodegradable resins is facilitated.

The content of nitrogen free extract in the degradation accelerator II of the invention is preferably 30% by mass or more and more preferably 40% by mass or more. No particular limitation is imposed on the upper limit of the content of nitrogen free extract, but the content of nitrogen free extract is generally 99% by mass or less because the purification cost for achieving 100% by mass is high.

In the degradation accelerator II of the invention, the total content of cellulose and lignin is 50% by mass or less. Cellulose and lignin are degraded and absorbed by microorganisms at a slower rate than nitrogen free extract. If the total content of cellulose and lignin in the degradation accelerator II of the invention exceeds 50% by mass, the biodegradation rate may decrease. The total content of cellulose and lignin in the degradation accelerator II of the invention is preferable 30% by mass or less and more preferably 20% by mass or less. No particular limitation is imposed on the lower limit of the total content of cellulose and lignin, but the total content is generally 5% by mass or more.

When the degradation accelerator II of the invention contains moisture, it is preferable that the degradation accelerator is dried to reduce the moisture content to less than 5% by mass. Suppose that the moisture content is 5% by mass or more. In this case, when the degradation accelerator II is mixed with a biodegradable resin, the biodegradable resin may be hydrolyzed, and its molecular weight may decrease, so that its mechanical strength may be insufficient.

The contents of nitrogen free extract, cellulose, and lignin in the degradation accelerator II of the invention can be measured and computed using methods described later in Examples.

When the degradation accelerator II is obtained using two or more raw materials, the contents of nitrogen free extract, cellulose, and lignin can be determined by multiplying the contents of nitrogen free extract, cellulose, and lignin in the raw materials by the mixing ratios of the raw materials and summing the products.

The degradation accelerator II of the invention contains 20% by mass or more of nitrogen free extract, and the total content of cellulose and lignin is 50% by mass or less. It is preferable that the mass ratio of nitrogen to carbon is 0.04 or more and that the mass ratio of the content of hemicellulose to the total content of cellulose and lignin is 0.2 or more.

<Method for producing degradation accelerator>

The degradation accelerator I of the invention can be obtained using a raw material containing cellulose, hemicellulose, and lignin with their concentrations and ratios controlled. Examples of the raw material that can be used include: residues of pressed plant seeds and fruits; removed husks and bran; wheat bran; and lees generated during oil refining and brewing. Specific examples include peanuts, rice, wheat, barley, oil palm, cotton, soybeans, rapeseed, and corn.

A nitrogen-containing organic material or a nitrogen-containing inorganic material may be added to the degradation accelerator I of the invention in order to adjust the nitrogen/carbon ratio to a prescribed range.

The degradation accelerator II of the invention can be obtained using a raw material containing nitrogen free extract with its concentration and ratio controlled. Examples of the raw material that can be used include: residues of pressed plant seeds and fruits; removed husks and bran; wheat bran; and lees generated during oil refining and brewing. Specific examples include pistachio, walnuts, chestnuts, peanuts, rice, wheat, barley, oil palm, bagasse, cotton, soybeans, rapeseed, and corn.

The degradation accelerator of the present invention can be obtained by pulverizing any of the above-described raw materials into a certain particle size. When two or more raw materials are used, the raw materials may be pulverized separately, or a mixture of the raw materials prepared in advance may be pulverized.

When the degradation accelerator I of the invention is produced, it is preferable, from the viewpoint of ease of controlling the nitrogen/carbon ratio and the hemicellulose/(cellulose + lignin) ratio within the above ranges, that the raw materials are pulverized separately in advance and then mixed together.

When the degradation accelerator II of the invention is produced, it is preferable, from the viewpoint of ease of controlling the ratios and percentages of nitrogen free extract, cellulose, and lignin within the above ranges, that the raw materials are pulverized separately in advance and then mixed together.

Each raw material may be pulverized using, for example, a pulverizer.

Any of various pulverizers such as a cutter mill, a stone mill, a grinder, a jet mill, a ball mill, and a pin mill can be used. Of these, a jet mill, a ball mill, and a pin mill are preferred in order to obtain a degradation accelerator with a prescribed particle diameter, and a jet mill is particularly preferred because the raw material can be pulverized continuously and effectively.

Pulverizing methods can be broadly classified into wet pulverization that uses a medium such as water and dry pulverization that uses no medium. Since it is necessary to dry the raw material to a prescribed moisture content, dry pulverization is preferred.

From the viewpoint of ease of mixing with a biodegradable resin used together with the degradation accelerator and ease of obtaining the effects of the degradation accelerator, the grain size after pulverization is generally 500 $\mu$m or less, preferably 300 $\mu$m or less, and more preferably 100 $\mu$m or less.

The degradation accelerator of the invention has a 50% mass-based cumulative particle size of preferably 60 $\mu$m or less, more preferably 40 $\mu$m or less, and particularly preferably 20 $\mu$m or less. The smaller the 50% mass-based cumulative particle size of the degradation accelerator, the better because the appearance of a biodegradable resin composition obtained by mixing the degradation accelerator with a biodegradable resin and the appearance of a biodegradable resin molded product obtained by molding the biodegradable resin composition are improved (for example, irregularities on sheet surfaces are eliminated and transparency is improved) and because the mechanical properties of the biodegradable resin molded product such as yield stress, fracture stress, Elmendorf tear strength, puncture impact strength, and fracture stress are improved.

No particular limitation is imposed on the lower limit of the 50% mass-based cumulative particle size, but the 50% mass-based cumulative particle size is preferably 1 $\mu$m or more. If the 50% mass-based cumulative particle size is less than 1 $\mu$m, the degradation accelerator may be difficult to handle because the degradation accelerator easily scatters and problems such as blocking and classification occur during mixing with a biodegradable resin.

The 50% mass-based cumulative particle size of the degradation accelerator of the invention is measured by a method described layer in Examples.

To obtain the preferred particle diameter and the preferred 50% mass-based cumulative particle size described above, it is preferable to select grains with a prescribed grain size using a mesh sieve or screen having a mesh size corresponding to the prescribed gran size, a centrifugal classifier, etc. Alternatively, a pulverizer having a classification mechanism may be used to perform pulverization and classification simultaneously.

The degradation accelerator of the invention can be obtained by mixing, at a specific ratio, powders obtained by pulverizing different raw materials and classified in the manner described above so as to have prescribed grain sizes. No particular limitation is imposed on the powders used preferably so long as they are powders of any of the above-described raw materials. Preferred examples of the powders include powders of rice bran, wheat bran, soybean meal, and rapeseed meal.

When the degradation accelerator of the invention is mixed with a biodegradable resin, it is preferable to dry the degradation accelerator in advance. This is because moisture in the atmosphere (air) in a storage environment adsorbs to the degradation accelerator during storage, so that the degradation accelerator is difficult to mix with the biodegradable resin due to the moisture. Moreover, when the degradation accelerator contains moisture, the biodegradable resin is hydrolyzed, and its molecular weight decreases, so that its mechanical strength decreases as described above. From this point of view also, it is preferable to dry the degradation accelerator.

It is therefore preferable that, during production and/or use of the degradation accelerator of the invention, the degradation accelerator is further dried after the pulverization and grain size adjustment.

The degradation accelerator may be dried using a general dryer at a temperature of about 40 to about 200°C.

By performing the drying treatment described above, the moisture content of the degradation accelerator is adjusted to less than 5% by mass and particularly preferably 0 to 3% by mass.

The moisture content of the degradation accelerator is computed from the following formula using the mass $W_x$ of the degradation accelerator and the mass $W_y$ of the degradation accelerator dried to an absolute dry state using a moisture content measurement method described later in Examples.

$$\text{Moisture content (\% by mass)} = \{(W_x - W_y)/W_x\} \times 100$$

[Biodegradable resin composition]

The biodegradable resin composition of the present invention contains from 2 parts by mass to 250 parts by mass inclusive of the degradation accelerator of the invention and 100 parts by mass of a biodegradable resin. In the biodegradable resin composition of the present invention, if the content of the degradation accelerator of the invention based on 100 parts by mass of the biodegradable resin is less than 2 parts by mass, the effect of improving the biodegradability when the degradation accelerator of the invention is contained cannot be obtained sufficiently. If the content of the degradation accelerator of the invention exceeds 250 parts by mass, the mechanical properties of a molded product to be obtained are impaired.

The biodegradable resin composition of the present invention contains the degradation accelerator of the invention in an amount of preferably from 10 parts by mass to 100 parts by mass inclusive and more preferably from 15 parts by mass to 80 parts by mass inclusive based on 100 parts by mass of the biodegradable resin.

No particular limitation is imposed on the biodegradable resin contained in the biodegradable resin composition of the present invention, so long as the biodegradable resin is biodegradable. The biodegradable resin may be an aliphatic polyester-based resin (A), an aliphatic-aromatic polyester-based resin (B), or an aliphatic oxycarboxylic acid-based resin (C).

A mixture of two or more selected from the aliphatic polyester-based resin (A), the aliphatic-aromatic polyester-based resin (B), and the aliphatic oxycarboxylic acid-based resin (C) may be used.

These biodegradable resins will next be described.

The aliphatic polyester-based resin (A), the aliphatic-aromatic polyester-based resin (B), and the aliphatic oxycarboxylic acid-based resin (C) are each a polymer having repeating units. Each repeating unit is derived from a specific compound and referred to as a compound unit corresponding to this compound. For example, a repeating unit derived from an aliphatic diol is referred to as an "aliphatic diol unit," and a repeating unit derived from an aliphatic dicarboxylic acid is referred to as an "aliphatic dicarboxylic acid unit." A repeating unit derived from an aromatic dicarboxylic acid is referred to as an "aromatic dicarboxylic acid unit."

The "main constituent units" in each of the aliphatic polyester-based resin (A), the aliphatic-aromatic polyester-based resin (B), and the aliphatic oxycarboxylic acid-based resin (C) are generally constituent units contained in the polyester-based resin in an amount of 80% by mass or more. Each of the aliphatic polyester-based resin (A), the aliphatic-aromatic polyester-based resin (B), and the aliphatic oxycarboxylic acid-based resin (C) may not contain a constituent unit other than the main constituent units at all.

<Aliphatic polyester-based resin (A)>

The aliphatic polyester-based resin (A) is preferably an aliphatic polyester-based resin including an aliphatic diol unit and an aliphatic dicarboxylic acid unit as main constituent units.

In the aliphatic polyester-based resin (A), the ratio of the amount of a succinic acid unit to the total amount of dicarboxylic acid units is preferably from 5% by mole to 100% by mole inclusive. The aliphatic polyester-based resin (A) may be a mixture of aliphatic polyester-based resins containing different amounts of the succinic acid unit. For example, an aliphatic polyester-based resin not containing aliphatic dicarboxylic acid units other than succinic acid (containing only the succinic acid unit as an aliphatic dicarboxylic acid unit) and an aliphatic polyester-based resin containing an aliphatic dicarboxylic acid unit other than succinic acid may be blended such that the amount of the succinic acid unit in the aliphatic polyester-based resin (A) used is adjusted within the above preferred range.

More specifically, the aliphatic polyester-based resin (A) is a polyester-based resin including an aliphatic diol unit represented by the following formula (1) and an aliphatic dicarboxylic acid unit represented by the following formula (2).

$$\text{-O-R}^1\text{-O-} \qquad (1)$$

$$\text{-OC-R}^2\text{-CO-} \qquad (2)$$

In formula (1), $R^1$ represents a divalent aliphatic hydrocarbon group. In formula (2), $R^2$ represents a divalent aliphatic hydrocarbon group.

The aliphatic diol unit and the aliphatic dicarboxylic acid unit represented by formulas (1) and (2), respectively, may be derived from compounds derived from petroleum, may be derived from compounds derived from plant raw materials, but are preferably derived from compounds derived from plant raw materials.

When the aliphatic polyester-based resin (A) is a copolymer, the aliphatic polyester-based resin (A) may contain two or more aliphatic diol units represented by formula (1) or may contain two or more aliphatic dicarboxylic acid units represented by formula (2).

As described above, the aliphatic dicarboxylic acid unit represented by formula (2) includes a succinic acid unit in an amount of preferably from 5% by mole to 100% by mole inclusive based on the total amount of dicarboxylic acid units. When the amount of the succinic acid unit in the aliphatic polyester-based resin (A) is in the above prescribed range, moldability is improved, and the biodegradable resin composition obtained can have good heat resistance and good degradability. For the same reason, the amount of the succinic acid unit in the aliphatic polyester-based resin (A) is preferably 10% by mole or more, more preferably 50% by mole or more, still more preferably 64% by mole or more, and particularly preferably 68% by mole based on the total amount of the dicarboxylic acid units.

The ratio of the amount of the succinic acid unit to the total amount of the dicarboxylic acid units in the aliphatic polyester-based resin (A) may be hereinafter referred to as the "amount of the succinic acid unit."

More preferably, the aliphatic dicarboxylic acid unit represented by formula (2) includes, in addition to succinic acid, at least one aliphatic dicarboxylic acid unit in an amount of from 5% by mole to 50% by mole inclusive based on the total amount of the dicarboxylic acid units. By copolymerizing the aliphatic dicarboxylic acid unit other than succinic acid in an amount within the above prescribed range, the crystallization temperature of the aliphatic polyester-based resin (A) can be reduced, and the biodegradation rate can be increased. For the same reason, the amount of the aliphatic dicarboxylic acid unit other than succinic acid in the aliphatic polyester-based resin (A) is preferably from 10% by mole to 45% by mole inclusive and more preferably from 15% by mole and 40% by mole inclusive based on the total amount of the dicarboxylic acid units.

No particular limitation is imposed on the aliphatic diol that provides the diol unit represented by formula (1). From the viewpoint of moldability and mechanical strength, the aliphatic diol is preferably an aliphatic diol having 2 to 10 carbon atoms and particularly preferably an aliphatic diol having 4 to 6 carbon atoms. Examples of such an aliphatic diol include ethylene glycol, 1,3-propanediol, 1,4-butanediol, and 1,4-cyclohexanedimethanol. Of these, 1,4-butanediol is particularly preferable. Two or more of these aliphatic diols may be used.

No particular limitation is imposed on the aliphatic dicarboxylic acid component that provides the aliphatic dicarboxylic acid unit represented by formula (2). The aliphatic dicarboxylic acid component is preferably an aliphatic dicarboxylic acid having 2 to 40 carbon atoms or a derivative thereof such as an alkyl ester thereof and particularly preferably an aliphatic dicarboxylic acid having 4 to 10 carbon atoms or a derivative thereof such as an alkyl ester thereof. Examples of the aliphatic dicarboxylic acid other than succinic acid and having 4 to 10 carbon atoms and derivatives thereof such as alkyl esters thereof include adipic acid, suberic acid, sebacic acid, dodecanedioic acid, dimer acid, and derivatives thereof such as alkyl esters thereof. Of these, adipic acid and sebacic acid are preferred, and adipic acid is particularly preferred. Two or more aliphatic dicarboxylic acid components may be used. In this case, a combination of succinic acid and adipic acid is preferred.

The aliphatic polyester-based resin (A) may have a repeating unit derived from an aliphatic oxycarboxylic acid (an aliphatic oxycarboxylic acid unit). Specific examples of the aliphatic oxycarboxylic acid component that provides the aliphatic oxycarboxylic acid unit include lactic acid, glycolic acid, 2-hydroxy-n-butyric acid, 2-hydroxycaproic acid, 6-hydroxycaproic acid, 2-hydroxy-3,3-dimethylbutyric acid, 2-hydroxy-3-methylbutyric acid, 2-hydroxyisocaproic acid, and derivatives thereof such as lower alkyl esters thereof and intramolecular esters thereof. When they have optical isomers, any of a D-form, an L-form, and a racemate may be used. The aliphatic oxycarboxylic acid component may be in the form of a solid, a liquid, or an aqueous solution. Of these, lactic acid, glycolic acid, and derivatives thereof are particularly preferred. One of these aliphatic oxycarboxylic acids may be used alone, or a mixture of two or more may be used.

When the aliphatic polyester-based resin (A) includes any of these aliphatic oxycarboxylic acid units, the content thereof with the total amount of all the constituent units forming the aliphatic polyester-based resin (A) set to 100% by mole is preferably 20% by mole or less, more preferably 10% by mole or less, still more preferably 5% by mole or less, and most preferably 0% by mole (the aliphatic polyester-based resin (A) includes no aliphatic oxycarboxylic acid unit), from the viewpoint of moldability.

The aliphatic polyester-based resin (A) may be prepared by copolymerizing a trifunctional or higher-functional aliphatic polyol with a trifunctional or higher-functional aliphatic polyvalent carboxylic acid, an acid anhydride thereof, or a trifunctional or higher-functional aliphatic polyvalent oxycarboxylic acid component, in order to increase melt viscosity.

Specific examples of the trifunctional aliphatic polyol include trimethylolpropane and glycerin. Specific examples of the tetrafunctional aliphatic polyol include pentaerythritol. One of them may be used alone, or a mixture of two or more may be used.

Specific examples of the trifunctional aliphatic polyvalent carboxylic acid and the acid anhydride thereof include propanetricarboxylic acid and acid anhydrides thereof.

Specific examples of the tetrafunctional polyvalent carboxylic acid and the acid anhydride thereof include cyclopentanetetracarboxylic acid and acid anhydrides thereof.

One of them may be used alone, or a mixture of two or more may be used.

The trifunctional aliphatic oxycarboxylic acids are classified into (i) a type in which two carboxyl groups and one hydroxyl group are present in one molecule and (ii) a type in which one carboxyl group and two hydroxyl groups are present. Any of these types may be used. From the viewpoint of moldability, mechanical strength, and the appearance of a molded article, (i) the type in which two carboxyl groups and one hydroxyl group are present in one molecule, such as malic acid, is preferred, and, more particularly, malic acid is used preferably.

The tetrafunctional aliphatic oxycarboxylic acid components are classified into (i) a type in which three carboxyl groups and one hydroxyl group are present in one molecule, (ii) a type in which two carboxyl groups and two hydroxyl groups are present in one molecule, and (iii) a type in which three hydroxyl groups and one carboxyl group are present in one molecule. Any of these types can be used. It is preferable that the tetrafunctional aliphatic oxycarboxylic acid component has a plurality of carboxyl groups, and more specific examples include citric acid and tartaric acid.

One of them may be used alone, or a mixture of two or more may be used.

When the aliphatic polyester-based resin (A) includes a constituent unit derived from the above-described trifunctional or higher-functional component, the lower limit of the content thereof with the total amount of all the constituent units forming the aliphatic polyester-based resin (A) set to 100% by mole is generally 0% by mole or more and preferably 0.01% by mole or more, and the upper limit is generally 5% by mole or less and preferably 2.5% by mole or less.

To produce the aliphatic polyester-based resin (A), a well-known polyester production method can be used. In this case, no particular limitation is imposed on the polycondensation reaction, and appropriate conditions conventionally used may be used. Generally, a method including allowing the esterification reaction to proceed and performing a pressure-reducing operation to further increase the degree of polymerization is used.

When the diol component forming the diol unit is reacted with the dicarboxylic acid component forming the dicarboxylic acid unit to produce the aliphatic polyester-based resin (A), the amount of the diol component used and the amount of the dicarboxylic acid component used are set such that the aliphatic polyester-based resin (A) to be produced has an intended composition. Generally, the diol component is reacted with substantially an equimolar amount of the dicarboxylic acid component. However, since the diol component is distilled during the esterification reaction, the diol component is generally used in an amount larger by 1 to 20% by mole than the amount of the dicarboxylic acid component.

When the aliphatic polyester-based resin (A) contains components (optional components) other than the essential components, such as the aliphatic oxycarboxylic acid unit and the polyfunctional component, compounds (monomers or oligomers) corresponding to the aliphatic oxycarboxylic acid unit and the polyfunctional component unit are reacted such that an intended composition is obtained. In this case, no limitation is imposed on the timing at which the optional components are introduced into the reaction system and the method for introducing the optional components. The timing and the method can be freely selected so long as an aliphatic polyester-based resin (A) preferable for the present invention can be produced.

For example, no particular limitation is imposed on the timing and method for introducing the aliphatic oxycarboxylic acid into the reaction system so long as the aliphatic oxycarboxylic acid is introduced before the diol component and the dicarboxylic acid component are subjected to the polycondensation reaction. Examples of the method include (1) and (2) below.

   (1) A method in which an aliphatic oxycarboxylic acid solution with a catalyst dissolved therein in advance is mixed.
   (2) A method in which the aliphatic oxycarboxylic acid is mixed simultaneously with introduction of the catalyst into the reaction system at the time of charging of the raw materials.

As for the timing for introducing the compound forming the polyfunctional component unit, the compound may be charged together with other monomers or oligomers at the beginning of polymerization or may be charged after transesterification but before the start of pressure reduction. Preferably, from the viewpoint of simplification of the process, the compound forming the polyfunctional component unit is charged together with the other monomers or oligomers.

Generally, the aliphatic polyester-based resin (A) is produced in the presence of a catalyst. Any of catalysts that can be used to produce well-known polyester-based resins can be freely selected so long as the effects of the present invention are not significantly impaired. Preferred examples of the catalyst include compounds of metals such as germanium, titanium, zirconium, hafnium, antimony, tin, magnesium, calcium, and zinc. Of these, germanium compounds and titanium compounds are preferred.

Examples of the germanium compounds that can be used as the catalyst include organic germanium compounds such as tetraalkoxy germanium and inorganic germanium compounds such as germanium oxide and germanium chloride. Of these, from the viewpoint of cost and availability, germanium oxide, tetraethoxy germanium, tetrabutoxy germanium, etc. are preferred, and germanium oxide is particularly preferred.

Examples of the titanium compounds that can be used as the catalyst include organic titanium compounds such as tetraalkoxy titaniums such as tetrapropyl titanate, tetrabutyl titanate, and tetraphenyl titanate. Of these, from the viewpoint of cost and availability, tetrapropyl titanate, tetrabutyl titanate, etc. are preferred.

Another catalyst may be used in combination so long as the object of the present invention is not impaired.

One of these catalysts may be used alone, or any combination of two or more may be used at any ratio.

The catalyst may be used in any amount so long as the effects of the present invention are not significantly impaired. The amount of the catalyst relative to the amount of the monomers used is generally 0.0005% by mass or more and more preferably 0.001% by mass or more and is generally 3% by mass or less and preferably 1.5% by mass or less. If the amount of the catalyst is lower than the lower limit in the above range, the effect of the catalyst may not be obtained. If the amount of the catalyst is higher than the upper limit in the above range, the cost of production may increase, and the polymer obtained may be colored significantly. Moreover, a reduction in hydrolysis resistance may occur.

No particular limitation is imposed on the timing for introducing the catalyst so long as the catalyst is introduced before the polycondensation reaction. The catalyst may be introduced at the time of charging of the raw materials or before the start of pressure reduction. When the aliphatic oxycarboxylic acid unit is introduced, it is preferable to use a method in which the catalyst is introduced together with a monomer or oligomer forming the aliphatic oxycarboxylic acid unit such as lactic acid or glycolic acid at the time of charging of the raw materials or a method in which the catalyst dissolved in an aqueous aliphatic oxycarboxylic acid solution is introduced. It is particularly preferable to use the method in which the catalyst dissolved in the aqueous aliphatic oxycarboxylic acid solution is introduced because the rate of polymerization increases.

The reaction conditions such as temperature, polymerization time, and pressure when the aliphatic polyester-based resin (A) is produced are freely set so long as the effects of the present invention are not significantly impaired.

The reaction temperature of the esterification reaction and/or transesterification of the dicarboxylic acid component and the diol component is generally 150°C or higher and preferably 180°C or higher and is generally 260°C or lower and preferably 250°C or lower.

The reaction atmosphere is generally an inert atmosphere such as nitrogen or argon.

The reaction pressure is generally normal atmospheric pressure to 10 kPa and is preferably normal atmospheric pressure.

The reaction time is generally 1 hour or longer and is generally 10 hours of shorter, preferably 6 hours or shorter, and more preferably 4 hours or shorter.

If the reaction temperature is excessively high, unsaturated bonds are generated excessively. In this case, gelation due to the unsaturated bonds may occur, so that it may be difficult to control the polymerization.

The polycondensation reaction conditions after the esterification reaction and/or transesterification of the dicarboxylic acid component and the diol component are as follows.

As for the degree of vacuum during the polycondensation reaction performed, the pressure is generally $0.01 \times 10^3$ Pa or higher and preferably $0.03 \times 10^3$ Pa or higher and is generally $1.4 \times 10^3$ Pa or lower and preferably $0.4 \times 10^3$ Pa or lower.

The reaction temperature is generally 150°C or higher and preferably 180°C or higher and is generally 260°C or lower and preferably 250°C or lower.

The reaction time is generally 2 hours or longer and is generally 15 hours or shorter and preferably 10 hours or shorter.

If the reaction temperature is excessively high, unsaturated bonds are generated excessively. In this case, gelation due to the unsaturated bonds may occur, so that it may be difficult to control the polymerization.

To produce the aliphatic polyester-based resin (A), a chain extender such as a carbonate compound or a diisocyanate compound may be used. In this case, the amount of the chain extender, i.e., the ratio of carbonate bonds or urethane bonds in the aliphatic polyester-based resin (A) with the total amount of all the constituent units forming the aliphatic polyester-based resin (A) set to 100% by mole, is generally 10% by mole or less, preferably 5% by mole or less, and more preferably 3% by mole or less.

When urethane bonds or carbonate bonds are present in the aliphatic polyester-based resin (A), there is a possibility that the biodegradability may be impaired. Therefore, in the present invention, the amount of the carbonate bonds based on the total amount of all the constituent units forming the aliphatic polyester-based resin (A) is less than 1% by mole, preferably 0.5% by mole or less, and more preferably 0.1% by mole or less, and the amount of the urethane bonds is 0.55% by mole or less, preferably 0.3% by mole or less, more preferably 0.12% by mole or less, and still more preferably 0.05% by mole or less. This amount in terms of parts by mass based on 100 parts by mass of the aliphatic polyester-based resin (A) is 0.9 parts by mass or less, preferably 0.5 parts by mass or less, more preferably 0.2 parts by mass or less, and still more preferably 0.1 parts by mass or less. In particular, if the amount of the urethane bonds is higher than the above upper limit, the urethane bonds may dissociate in a film formation process etc., and smoke and odors from a molten film through an outlet of a die may cause a problem. Moreover, foaming in the molten film may cause the film to be cut, so that the film may not be formed stably.

The amount of the carbonate bonds and the amount of the urethane bonds in the aliphatic polyester-based resin (A) can be determined by computation using the results of NMR measurement such as $^1$H-NMR measurement or $^{13}$C-NMR measurement.

Specific examples of the carbonate compound used as the chain extender include diphenyl carbonate, ditolyl carbonate, bis(chlorophenyl)carbonate, m-cresyl carbonate, dinaphthyl carbonate, dimethyl carbonate, diethyl carbonate, dibutyl carbonate, ethylene carbonate, diamyl carbonate, and dicyclohexyl carbonate. Moreover, carbonate compounds derived from hydroxy compounds such as phenols and alcohols and including one or different types of hydroxy compounds are also usable.

Specific examples of the diisocyanate compound include well-known diisocyanates such as 2,4-tolylene diisocyanate, a mixture of 2,4-tolylene diisocyanate and 2,6-tolylene diisocyanate, 1,5-naphthylene diisocyanate, xylylene diisocyanate, hydrogenated xylylene diisocyanate, hexamethylene diisocyanate, isophorone diisocyanate, 4,4'-dicyclohexylmethane diisocyanate, tetramethylxylylene diisocyanate, 2,4,6-triisopropylphenyl diisocyanate, 4,4'-diphenylmethane diisocyanate, and tolidine diisocyanate.

Moreover, dioxazoline, silicic acid esters, etc. may be used as additional chain extenders.

Specific examples of the silicic acid esters include tetramethoxysilane, dimethoxydiphenylsilane, dimethoxydimethylsilane, and diphenyldihydroxysilane.

A high-molecular weight polyester-based resin using any of these chain extenders (coupling agents) can be produced using a conventional technique. The chain extender in a homogeneously molten state is added to the reaction system without using a solvent after completion of polycondensation and is reacted with the polyester obtained by the polycondensation.

More specifically, a polyester-based resin having an increased molecular weight can be obtained by reacting the chain extender with a polyester that is obtained by a catalytic reaction of the diol component and the dicarboxylic acid component, has substantially a hydroxyl group as a terminal group, and has a weight average molecular weight (Mw) of 20,000 or more and preferably 40,000 or more. With a prepolymer having a weight average molecular weight of 20,000 or more together with the use of a small amount of the chain extender, a high-molecular weight polyester-based resin can be produced even under severe conditions such as a molten state because the prepolymer is not influenced by the remaining catalyst.

The weight average molecular weight (Mw) of the polyester-based resin is determined as a value converted using monodispersed polystyrenes from a measurement value by gel permeation chromatography (GPC) using chloroform as a solvent at a measurement temperature of 40°C.

Therefore, when, for example, the above diisocyanate compound serving as the chain extender is used to further increase the molecular weight of the polyester-based resin, it is preferable to use a prepolymer having a weight average molecular weight of 20,000 or more and preferably 40,000 or more. If the weight average molecular weight is less than 20,000, the amount of the diisocyanate compound used to increase the molecular weight increases, and this may cause a reduction in heat resistance. When the above prepolymer is used, a polyester-based resin having urethane bonds derived from the diisocyanate compound and having a linear structure in which prepolymer molecules are linked through the urethane bonds is produced.

The pressure during chain extension is generally from 0.01 MPa to 1 MPa inclusive, preferably from 0.05 MPa to 0.5 MPa inclusive, and more preferably from 0.07 MPa to 0.3 MPa inclusive and is most preferably normal atmospheric pressure.

The reaction temperature during chain extension is generally 100°C or higher, preferably 150°C or higher, more preferably 190°C or higher, and most preferably 200°C or higher and is generally 250°C or lower, preferably 240°C or lower, and more preferably 230°C or lower. If the reaction temperature is excessively low, the viscosity is high, and it is difficult for the reaction to proceed uniformly. Moreover, a high stirring power tends to be required. If the reaction temperature is excessively high, gelation and decomposition of the polyester-based resin tend to occur.

The chain extension reaction time is generally 0.1 minutes or longer, preferably 1 minute or longer, and more preferably 5 minutes or longer and is generally 5 hours or shorter, preferably 1 hour or shorter, more preferably 30 minutes or shorter, and most preferably 15 minutes or shorter. If the reaction time is excessively short, the effect of the addition of the chain extender tends not to be obtained. If the reaction time is excessively long, the gelation and decomposition of the polyester-based resin tend to occur.

As for the molecular weight of the aliphatic polyester-based resin (A), its weight average molecular weight (Mw) determined from measurement by gel permeation chromatography (GPC) using monodispersed polystyrene reference materials is generally from 10,000 to 1,000,000 inclusive. The Mw is preferably from 20,000 to 500,000 inclusive and more preferably from 50,000 to 400,000 inclusive because such a weight average molecular weight is advantageous in terms of moldability and mechanical strength.

The melt flow rate (MFR) of the aliphatic polyester-based resin (A) that is measured at 190°C and a load of 2.16 kg according to JIS K7210 (1999) is generally from 0.1 g/10 minutes to 100 g/10 minutes inclusive. From the viewpoint of moldability and mechanical strength, the MFR is preferably 50 g/10 minutes or less and particularly preferably 40 g/10 minutes or less. The MFR of the aliphatic polyester-based resin (A) can be controlled by changing its molecular weight.

The melting point of the aliphatic polyester-based resin (A) is preferably 70°C or higher and more preferably 75°C or higher and is preferably 170°C or lower, more preferably 150°C or lower, and particularly preferably lower than 130°C. When the aliphatic polyester-based resin (A) has a plurality of melting points, it is preferable that at least one of the melting points falls within the above range. If the melting point is outside the above range, moldability is poor.

The elastic modulus of the aliphatic polyester-based resin (A) is preferably 180 to 1000 MPa.

If the elastic modulus is less than 180 MPa, a problem tends to occur in moldability. If the elastic modulus exceeds 1000 MPa, shock strength tends to deteriorate.

No particular limitation is imposed on the methods for adjusting the melting point and elastic modulus of the aliphatic polyester-based resin (A). The melting point and the elastic modulus can be adjusted, for example, by selecting the type of copolymerizing component of the aliphatic dicarboxylic acid component other than succinic acid, adjusting the copolymerizing ratio, or combining them.

The number of aliphatic polyester resins (A) used is not limited to one, and two or more aliphatic polyester resins (A) that differ in types of constituent units, the ratio of the constituent units, production method, physical properties, etc. may be blended and used.

<Aliphatic-aromatic polyester-based resin (B)>

The aliphatic-aromatic polyester-based resin (B) is a polyester-based resin in which at least part of the repeating units in the aliphatic polyester-based resin (A) are replaced by an aromatic compound unit and is preferably, for example, a polyester-based resin in which part of the aliphatic dicarboxylic acid unit in the aliphatic polyester-based resin (A) is replaced by an aromatic dicarboxylic acid unit and which includes the aliphatic diol unit, the aliphatic dicarboxylic acid unit, and the aromatic dicarboxylic acid unit as main constituent units.

Examples of the aromatic compound unit include aromatic diol units having an aromatic hydrocarbon group optionally having a substituent, aromatic dicarboxylic acid units having an aromatic hydrocarbon group optionally having a substituent, aromatic dicarboxylic acid units having an aromatic heterocyclic group optionally having a substituent, and aromatic oxycarboxylic acid units having an aromatic hydrocarbon group optionally having a substituent. The aromatic hydrocarbon group and the aromatic heterocyclic group may each be a monocyclic group or may include a plurality of rings mutually connected or fused. Specific examples of the aromatic hydrocarbon group include a 1,2-phenylene group, a 1,3-phenylene group, a 1,4-phenylene group, a dinaphthylene group, and a diphenylene group. Specific examples of the aromatic heterocyclic group include a 2,5-furandiyl group.

Specific examples of the aromatic dicarboxylic acid component that provides the aromatic dicarboxylic acid unit include terephthalic acid, isophthalic acid, naphthalenedicarboxylic acid, diphenyldicarboxylic acid, and 2,5-furandicarboxylic acid. Of these, terephthalic acid is preferred.

The aromatic dicarboxylic acid component may be a derivative of an aromatic dicarboxylic acid compound. For example, a derivative of any of the above-exemplified aromatic dicarboxylic acid components is preferred, and examples thereof include lower alkyl esters having 1 to 4 carbon atoms and acid anhydrides. Specific examples of the derivative of the aromatic dicarboxylic acid compound include: lower alkyl esters such as methyl esters, ethyl esters, propyl esters, and butyl esters of the above-exemplified aromatic dicarboxylic acid components; and cyclic acid anhydrides of the above-exemplified aromatic dicarboxylic acid components such as succinic anhydride. Of these, dimethyl terephthalate is preferred.

Specific examples of the aromatic diol component that provides the aromatic diol unit include xylylene glycol, 4,4'-dihydroxybiphenyl, 2,2-bis(4'-hydroxyphenyl)propane, 2,2-bis(4'-$\beta$-hydroxyethoxyphenyl)propane, bis(4-hydroxyphenyl) sulfone, and bis(4-$\beta$-hydroxyethoxyphenyl)sulfonic acid. The aromatic diol component may be a derivative of an aromatic diol compound. A compound having a structure in which a plurality of aliphatic diol compounds and/or a plurality of aromatic diol compounds are dehydration-condensed may be used.

Specific examples of the aromatic oxycarboxylic acid component that provides the aromatic oxycarboxylic acid unit include p-hydroxybenzoic acid and p-$\beta$-hydroxyethoxybenzoic acid. The aromatic oxycarboxylic acid component may be a derivative of an aromatic oxycarboxylic acid compound. A compound (oligomer) having a structure in which a plurality of aliphatic oxycarboxylic acid compounds and/or a plurality of aromatic oxycarboxylic acid compounds are dehydration-condensed may be used. Specifically, an oligomer may be used as a raw material.

When the aromatic compound component that provides the aromatic compound unit has optical isomers, any of a D-form, an L-form, and a racemate may be used.

The aromatic compound component is not limited to the above examples so long as the aromatic compound component can provide the aromatic compound unit.

One aromatic compound component may be used alone, or any combination of two or more at any ratio may be used.

In the aliphatic-aromatic polyester-based resin (B), it is preferable to use the aromatic dicarboxylic acid component as the component that provides the aromatic compound unit. In this case, the content of the aromatic dicarboxylic acid unit is preferably from 10% by mole to 80% by mole inclusive based on the total amount (100% by mole) of the aliphatic dicarboxylic acid unit and the aromatic dicarboxylic acid unit.

The aromatic dicarboxylic acid component used is preferably terephthalic acid or 2,5-furandicarboxylic acid. In this case, the aliphatic-aromatic polyester-based resin (B) is preferably polybutylene terephthalate adipate and/or a polybutylene terephthalate succinate-based resin. The aliphatic-aromatic polyester-based resin (B) is also preferably a polybutylene-2,5-furandicarboxylate-based resin.

The aliphatic-aromatic polyester-based resin (B) can be produced in the same manner as that for the aliphatic polyester-based resin (A) using at least the aromatic compound component as a raw material.

As for the molecular weight of the aliphatic-aromatic polyester-based resin (B), its weight average molecular weight (Mw) determined from measurement by gel permeation chromatography (GPC) using monodispersed polystyrene reference materials is generally from 10,000 to 1,000,000 inclusive. The Mw is preferably from 30,000 to 800,000 inclusive and more preferably from 50,000 to 600,000 inclusive because such a weight average molecular weight is advantageous in terms of moldability and mechanical strength.

The melt flow rate (MFR) of the aliphatic-aromatic polyester-based resin (B) that is measured at 190°C and a load of 2.16 kg according to JIS K7210 (1999) is generally from 0.1 g/10 minutes to 100 g/10 minutes inclusive. From the viewpoint of moldability and mechanical strength, the MFR is preferably 50 g/10 minutes or less and particularly preferably 30 g/10 minutes or less. The MFR of the aliphatic-aromatic polyester-based resin (B) can be controlled by changing its molecular weight.

The melting point of the aliphatic-aromatic polyester-based resin (B) is generally 60°C or higher, preferably 70°C or higher, and more preferably 80°C or higher and is preferably 150°C or lower, more preferably 140°C or lower, and particularly preferably 120°C or lower. When the aliphatic-aromatic polyester-based resin (B) has a plurality of melting points, it is preferable that at least one of the melting points falls within the above range. If the melting point is outside the above range, moldability is poor.

The elastic modulus of the aliphatic-aromatic polyester-based resin (B) is preferably 180 to 1000 MPa.

If the elastic modulus is less than 180 MPa, a problem tends to occur in moldability. If the elastic modulus exceeds 1000 MPa, shock strength tends to deteriorate.

No particular limitation is imposed on the methods for adjusting the melting point and elastic modulus of the aliphatic-aromatic polyester-based resin (B). The melting point and the elastic modulus can be adjusted, for example, by selecting the type of copolymerizing component of the aliphatic dicarboxylic acid component other than the aromatic dicarboxylic acid component, adjusting the copolymerizing ratio, or combining them.

The number of aliphatic-aromatic polyester-based resins (B) used is not limited to one, and two or more aliphatic-aromatic polyester-based resins (B) that differ in types of constituent units, the ratio of the constituent units, production method, physical properties, etc. may be blended and used.

<Aliphatic oxycarboxylic acid-based resin (C)>

The aliphatic oxycarboxylic acid-based resin (C) includes an aliphatic oxycarboxylic acid unit as a main constituent unit. Preferably, the aliphatic oxycarboxylic acid unit is represented by the following formula (3).

$$-O-R^3-CO- \qquad (3)$$

In formula (3), $R^3$ represents a divalent aliphatic hydrocarbon group or a divalent alicyclic hydrocarbon group.

Specific examples of the aliphatic oxycarboxylic acid component that provides the aliphatic oxycarboxylic acid unit in formula (3) include lactic acid, glycolic acid, 2-hydroxy-n-butyric acid, 2-hydroxycaproic acid, 2-hydroxy-3,3-dimethylbutyric acid, 2-hydroxy-3-methylbutyric acid, 2-hydroxyisocaproic acid, and mixtures thereof. When they have optical isomers, any of a D-form and an L-form may be used. Of these, lactic acid and glycolic acid are preferred. A mixture of two or more of these aliphatic oxycarboxylic acid components may be used.

The aliphatic oxycarboxylic acid-based resin (C) is particularly preferably polylactic acid (PLA).

A urethane bond, an amide bond, a carbonate bond, an ether bond, etc. may be introduced into the aliphatic oxycarboxylic acid-based resin (C) so long as the biodegradability is not affected.

No particular limitation is imposed on the method for producing the aliphatic oxycarboxylic acid-based resin (C), and any known method such as a direct polymerization method for oxycarboxylic acid or a ring-opening polymerization method for a cyclic compound may be used for production.

As for the molecular weight of the aliphatic oxycarboxylic acid-based resin (C), its weight average molecular weight (Mw) determined from measurement by gel permeation chromatography (GPC) using monodispersed polystyrene reference materials is generally from 10,000 to 1,000,000 inclusive. The Mw is preferably from 20,000 to 500,000 inclusive and more preferably from 50,000 to 400,000 inclusive because such a weight average molecular weight is advantageous in terms of moldability and mechanical strength.

The melt flow rate (MFR) of the aliphatic oxycarboxylic acid-based resin (C) is a value measured at 190°C and a load of 2.16 kg according to JIS K7210 (1999) and is generally from 0.1 g/10 minutes to 100 g/10 minutes inclusive. From the viewpoint of moldability and mechanical strength, the MFR of the aliphatic oxycarboxylic acid-based resin (C) is preferably 50 g/10 minutes or less and particularly preferably 40 g/10 minutes or less. The MFR of the aliphatic oxycarboxylic acid-based resin (C) can be controlled by changing its molecular weight.

The melting point of the aliphatic oxycarboxylic acid-based resin (C) is preferably 70°C or higher and more preferably 75°C or higher and is preferably 170°C or lower, more preferably 150°C or lower, and particularly preferably lower than 130°C. When the aliphatic oxycarboxylic acid-based resin (C) has a plurality of melting points, it is preferable that at least one of the melting points falls within the above range. If the melting point is outside the above range, moldability is poor.

The elastic modulus of the aliphatic oxycarboxylic acid-based resin (C) is preferably 180 to 1000 MPa.

If the elastic modulus is less than 180 MPa, a problem tends to occur in moldability. If the elastic modulus exceeds 1000 MPa, shock strength tends to deteriorate.

No particular limitation is imposed on the methods for adjusting the melting point and elastic modulus of the aliphatic oxycarboxylic acid-based resin (C). The melting point and the elastic modulus can be adjusted, for example, by selecting the type of copolymerizing component other than the aliphatic oxycarboxylic acid, adjusting the copolymerizing ratio, or combining them.

A polyhydroxyalkanoate (D) described below can also be used preferably as the aliphatic oxycarboxylic acid-based resin (C).

The polyhydroxyalkanoate (D) (which may be hereinafter referred to as PHA) used preferably in the present invention is an aliphatic polyester including a repeating unit represented by a general formula: [-CHR-CH2-CO-O-] (where R is an alkyl group having 1 to 15 carbon atoms) and is a copolymer including a 3-hydroxybutyrate unit and a 3-hydroxyhexanoate unit as main constituent units.

From the viewpoint of moldability and thermal stability, the polyhydroxyalkanoate (D) includes, as a constituent unit, the 3-hydroxybutyrate unit in an amount of preferably 80% by mole or more and more preferably 85% by mole or more. Preferably, the polyhydroxyalkanoate (D) is produced by microorganisms.

Specific examples of the polyhydroxyalkanoate (D) include poly(3-hydroxybutyrate-co-3-hydroxyhexanoate) copolymer resins and poly(3-hydroxybutyrate-co-3-hydroxyvalerate-co-3-hydroxyhexanoate) copolymer resins.

In particular, from the viewpoint of moldability and the physical properties of a molded product to be obtained, a poly(3-hydroxybutyrate-co-3-hydroxyhexanoate) copolymer resin, i.e., PHBH, is preferred.

In the polyhydroxyalkanoate (D), the constituent ratio of 3-hydroxybutyrate (hereinafter may be referred to as 3HB) to a copolymerized comonomer such as 3-hydroxyhexanoate (hereinafter referred to as 3HH), i.e., the monomer ratio in the copolymer resin, is preferably 3-hydroxybutyrate/comonomer = 97/3 to 80/20 (% by mole/% by mole) and more preferably 95/5 to 85/15 (% by mole/% by mole), from the viewpoint of moldability, the quality of a molded product, etc. If the comonomer ratio is less than 3% by mole, the molding temperature approaches thermal decomposition temperature, and it may be difficult to perform molding. If the comonomer ratio exceeds 20% by mole, crystallization of the polyhydroxyalkanoate (D) slows down, so that the productivity may deteriorate.

The ratios of the monomers in the polyhydroxyalkanoate (D) can be measured by gas chromatography as follows.

2 mL of a sulfuric acid/methanol mixture (15/85 (mass ratio)) and 2 mL of chloroform are added to about 20 mg of dry PHA, and the resulting mixture is hermetically sealed and heated at 100°C for 140 minutes to thereby obtain a methyl ester of a PHA decomposition product. After cooling, 1.5 g of sodium hydrogencarbonate is gradually added to the methyl ester for neutralization, and the mixture is left to stand until generation of carbon dioxide gas is stopped. Then 4 mL of diisopropyl ether is added, and the mixture is well mixed. The monomer unit composition of the PHA decomposition product in the supernatant is analyzed by capillary gas chromatography to thereby determine the ratios of the monomers in the copolymer resin.

The molecular weight of the polyhydroxyalkanoate (D) is measured by the gel permeation chromatography (GPC) described above, and its weight average molecular weight (Mw) measured using monodispersed polystyrenes as standard materials is generally from 200,000 to 2,500,000 inclusive. The Mw is preferably from 250,000 to 2,000,000 inclusive and more preferably from 300,000 to 1,000,000 inclusive because such a weight average molecular weight is advantageous in terms of moldability and mechanical strength. If the Mw is less than 200,000, the mechanical properties etc. may be poor. If the Mw exceeds 2,500,000, it may be difficult to perform molding.

The melt flow rate (MFR) of the polyhydroxyalkanoate (D) is a value measured at 190°C and a load of 2.16 kg according to JIS K7210 (1999) and is preferably from 0.1 g/10 minutes to 100 g/10 minutes inclusive. From the viewpoint of moldability and mechanical strength, the MFR is preferably 80 g/10 minutes or less and particularly preferably 50 g/10 minutes or less. The MFR of the polyhydroxyalkanoate (D) can be controlled by changing its molecular weight.

The melting point of the polyhydroxyalkanoate (D) is preferably 100°C or higher and more preferably 120°C or higher and is preferably 180°C or lower, more preferably 170°C or lower, and particularly preferably lower than 160°C. When the polyhydroxyalkanoate (D) has a plurality of melting points, it is preferable that at least one of the melting points falls within the above range.

The polyhydroxyalkanoate (D) is produced using microorganisms such as Alcaligenes eutrophus AC32 strain produced by introducing a PHA synthetic enzyme gene derived from Aeromonas caviae into Alcaligenes eutrophus (international deposit under the Budapest Treaty, international depositary authority: International Patent Organism Depositary, National Institute of Advanced Industrial Science and Technology (Central 6, 1-1-1 Higashi, Tsukuba, Ibaraki, Japan), date of original deposit: August 12 Heisei 8, transferred on August 7 Heisei 9, accession number: FERM BP-6038 (transferred from original deposit (FERM P-15786)) (J. Bacteriol., 179, 4821 (1997)).

The polyhydroxyalkanoate (D) used may be a commercial product. For example, "PHBH X331N," "PHBH X131A," and "PHBH X151A" all manufactured by Kaneka Corporation may be used as the commercial product of the polyhydroxyalkanoate (D) including, as main constituent units, the 3-hydroxybutyrate unit and the 3-hydroxyhexanoate unit.

In the present invention, the number of aliphatic oxycarboxylic acid-based resins (C) including the polyhydroxyalkanoate (D) is not limited to one, and a blend of two or more aliphatic oxycarboxylic acid-based resins (C) that differ in types of constituent units, the ratio of the constituent units, production method, physical properties, etc. may be used.

<Additional components>

The biodegradable resin composition of the present invention may contain, in addition to the degradation accelerator of the invention, one or two or more "additional components" selected from various additives such as a filler (filler material), a plasticizer, an antistatic agent, an antioxidant, a light stabilizer, an ultraviolet absorber, a dye, a pigment, an anti-hydrolysis agent, a nucleating agent, an antiblocking agent, a weathering agent, a thermal stabilizer, a flame retardant, a release agent, an antifogging agent, a surface wetting improver, an incineration aid, a dispersing aid, various surfactants, and a slipping agent.

A functional additive such as a freshness preserving agent or an antimicrobial agent may also be added to the biodegradable resin composition of the present invention.

These additional components may be optionally added so long as the effects of the present invention are not impaired. One of them may be used alone, or a mixture of two or more may be used.

Generally, the content of these additional components in the biodegradable resin composition of the present invention, i.e., the total amount of the additional components, is preferably from 0.01% by mass to 40% by mass inclusive based on the total amount of the biodegradable resin composition of the present invention, in order to prevent deterioration of the physical properties of the biodegradable resin composition of the present invention.

<Method for producing biodegradable resin composition>

The biodegradable resin composition of the present invention is produced by kneading the above-described degradable resin and the degradation accelerator of the invention in a kneader to disperse the degradation accelerator in the biodegradable resin. Optional additional resins and additional components may be mixed together with the degradation accelerator and the biodegradable resin in the kneader.

The mixing step is performed by mixing the degradation accelerator of the invention, the biodegradable resin, the optional additional resins, and the optional additional components at a prescribed ratio simultaneously or in any order using a mixer such as a tumbler, a V blender, a Nauta mixer, a Banbury mixer, kneading rolls, or an extruder. Preferably, the resulting mixture is then melt-kneaded.

The kneader used in the mixing step may be a melt kneader. The extruder may be any of a twin screw extruder and a single screw extruder. However, a twin screw extruder is more preferred.

The temperature during melt kneading is preferably 140 to 220°C. In this temperature range, the time required for the melt reaction can be reduced, and color fading due to deterioration of the resin, carbonization of the degradation accelerator, etc. can be prevented. Moreover, practical physical properties such as shock resistance and resistance to moist heat can be further improved. From the same point of view, the temperature during melt kneading is more preferably 150 to 210°C.

From the viewpoint of avoiding deterioration of the resin more reliably as in the above case, an unnecessarily long melt kneading time should be avoided. The melt kneading time is preferably from 20 seconds to 20 minutes inclusive and more preferably from 30 seconds to 15 minutes inclusive.

It is therefore preferable to set the conditions such as the melt kneading temperature and the time such that the above melt kneading conditions are satisfied.

[Molded product]

The biodegradable resin composition of the present invention can be molded using any of various molding methods used for general-purpose plastics. Examples of the molding method include compression molding (compressive molding, laminate molding, and stampable molding), injection molding, extrusion molding and coextrusion molding (molding of films using an inflation or T-die method, laminate molding, molding of pipes, molding of wires/cables, and molding of profiles), hot press forming, blow molding (various types of blow molding), calendering, solid forming (monoaxial stretching, biaxial stretching, roll forming, forming of stretched and oriented non-woven fabrics, thermoforming (vacuum forming and air pressure forming), plastic working, powder molding (rotation molding), and various types of forming of nonwoven fabrics (such as a dry method, a bonding method, an entangling method, and a spunbonding method). Of these, injection molding, extrusion molding, compression molding, or hot press forming is preferably used. Specific examples of the shape of the molded product include a sheet shape and a film shape, and the molded product is preferably applied to a container.

The biodegradable resin molded product of the present invention prepared by molding the degradation accelerator of the invention may be subjected to various types of secondary processing for the purpose of imparting chemical function, electrical function, magnetic function, mechanical function, frictional/abrasive/lubricating function, optical function, thermal function, and surface function such as biocompatibility. Examples of the secondary processing include embossing, painting, bonding, printing, metalizing (plating etc.), mechanical processing, and surface treatment (such as antistatic treatment, corona discharge treatment, plasma treatment, photochromism treatment, physical vapor deposition, chemical vapor deposition, and coating).

[Applications]

The biodegradable resin molded product of the present invention formed from the biodegradable resin composition of the present invention is used preferably for a wide variety of applications such as packaging materials for packaging liquid materials, powdery materials, and solid materials such as various foods, chemicals, and sundry goods, agricultural materials, building materials, etc. Specific examples of the applications include injection molded articles (such as trays for perishables, fast food containers, coffee capsule containers, cutlery, and outdoor leisure products), extrusion molded articles (such as films, sheets, fishing lines, fishing nets, slope protecting and greening nets, sheets for secondary processing, and water-retaining sheets), and blow molded articles (such as bottles). Other examples include agricultural films, coating materials, fertilizer coating materials, nursery pots, laminate films, plates, stretched sheets, monofilaments, nonwoven fabrics, flat yarns, staples, crimped fibers, streaked tapes, split yarns, composite fibers, blow bottles, shopping bags, garbage bags, compost bags, cosmetic containers, detergent containers, bleach containers, ropes, binding materials, sanitary cover stock materials, cooler boxes, cushioning films, multifilaments, synthetic paper sheets, and medical materials such as surgical threads, sutures, artificial bones, artificial skins, DDSs such as microcapsules, and wound covering materials.

The biodegradable resin molded product of the present invention is preferable for food containers such as food packaging films, perishable food trays, fast food containers, and lunch boxes.

[EXAMPLES]

The details of the present invention will be specifically described by way of Examples and Comparative Examples. However, the present invention is not limited to the following Examples so long as they do not depart from the scope of the invention. Various production conditions and the values of evaluation results in the following Examples have meanings as preferred upper or lower limits in the embodiments of the present invention, and preferred ranges may be ranges defined by any combination of the above-described upper or lower limit values and values in the following Examples or any combination of the values in the following Examples.

[Measurement on degradation accelerator]

<Measurement and computation of nitrogen content and carbon content>

The nitrogen content and the carbon content were measured using a commercial automatic analyzer that uses a combustion method capable of analyzing nitrogen and carbon simultaneously.

The nitrogen content and the carbon content can be measured separately using a total nitrogen measurement method or a nitrogen measurement apparatus compatible with JIS K0102, JIS K6451-1, JIS M8819, JIS Z7302-8 etc. and a carbon measurement apparatus compatible with JIS K0102, JIS M8819, JIS Z7302-8, etc., respectively.

<Measurement and computation of cellulose content, lignin content, and hemicellulose content>

The cellulose content, the lignin content, and the hemicellulose content of the degradation accelerator I were determined from the following formulas using the value of heat-stable $\alpha$-amylase-treated neutral detergent fiber (aNDFom), the value of acid detergent fiber (ADFom), and the value of acid detergent lignin (ADL).

$$\text{Cellulose (\%) = ADFom (\%) - ADL (\%)}$$

$$\text{Lignin (\%) = ADL (\%)}$$

$$\text{Hemicellulose (\%) = aNDFom (\%) - ADFom (\%)}$$

These aNDFom, ADFom, and ADL were measured using routine methods (with reference to, for example, "Shiryou bunsekihou-kaisetsu 2009 (Methods of analysis in feeds and feed additives)" published by Japan Scientific Feeds Association, "Shiryou bunseki kijyun (Feed Analysis Standards)" Incorporated Administrative Agency Food and Agricultural Materials Inspection Center "(http://www.famic.go.jp/ffis/feed/bunseki/bunsekikijun.html ), and "Saikin no shiryousakumotsu no eiyou hyouka ni kansuru kenkyu no doukou (Recent trends in research on evaluation of nutrition of forage crops)," National Agriculture and Food Research Organization "(http://www.naro.affrc.go.jp/nilgs-neo/kenkyukai/files/jikyushiryoriyo2016_koen07.pdf)).
The measurement methods are summarized as follows.

<<aNDFom>>

Sodium sulfite and a neutral detergent solution were added to a specimen (mass: W1), and the mixture was boiled. Next, heat-stable α-amylase was added, and the resulting mixture was boiled. Insoluble matter was collected by filtration using, for example, a glass filter, washed, dried, and weighed (W2). Next, the insoluble matter was heated, incinerated, and weighed (W3). aNDFom (%) was determined from the following formula.

$$\text{aNDFom (\%) = 100} \times \text{(W2 - W3)/W1}$$

<<ADFom and ADL>>

An acidic detergent solution was added to a specimen (mass: W4), and the mixture was boiled. Then insoluble matter was collected by filtration using, for example, a glass filter, washed, dried, and weighed (W5). Next, the insoluble matter was treated with 72% sulfuric acid, and then the resulting insoluble matter was washed, dried, and weighed (W6). Finally, the insoluble matter was heated, incinerated, and weighed (W7). ADFom (%) and ADL (%) were determined from the following formulas.

$$\text{ADFom (\%) = 100} \times \text{(W5 - W7)/W4}$$

$$\text{ADL (\%) = 100} \times \text{(W6 - W7)/W4}$$

The content of cellulose and the content of lignin in the degradation accelerator II were measured, computed, and determined in the same manner as described above using the value of acid detergent fiber (ADFom) and the value of acid detergent lignin (ADL).

<Measurement and computation of nitrogen free extract content>

The nitrogen free extract was determined using the following formula according to the official specifications of feed (the 756th notification of the Ministry of Agriculture, Forestry and Fisheries, July 24, Showa 51).

$$\text{Nitrogen free extract (\%) = 100 - (moisture (\%) + crude}$$

$$\text{protein (\%) + crude fat (\%) + crude fiber (\%) + crude ash}$$

$$\text{(\%))}$$

The values of moisture, crude protein, crude fat, crude fiber, and crude ash were determined according to the official specifications of feed or other known methods as follows.

<<Moisture>>

As a quantitative method for moisture, a heating loss method was used.

In this method, an automatic moisture measurement apparatus was used to dry a specimen at 135°C until the rate of weight change became a certain value or less, and the amount of moisture was determined from the weight change before and after the drying. Alternatively, the weighed specimen may be dried at 135°C for 2 hours, allowed to cool in a desiccator, then weighed, and the loss of weight may be computed as the amount of moisture.

Moreover, the Karl Fischer method, for example, may be used as the quantitative method for moisture.

<<Crude protein>>

As a quantitative method for crude protein, the Kjeldahl method was used.

In this method, first, sulfuric acid and the degradation accelerator were added to a specimen, and the mixture was heated to convert nitrogen in the specimen to an ammonium salt. Next, sodium hydroxide was added, and the resulting mixture was heated. Ammonia generated was collected in sulfuric acid with a known concentration, and the resulting solution was titrated with an aqueous sodium hydroxide solution with a known concentration to measure the amount of nitrogen. The obtained value of the nitrogen amount (% by mass) was multiplied by a nitrogen-protein conversion factor (6.25) to thereby determine the amount of crude protein.

Alternatively, to measure the amount of nitrogen, an automatic analyzer using a combustion method (Dumas method) may be used.

<<Crude fat>>

As a quantitative method for crude fat, a diethyl ether extraction method was used.

In this method, a Soxhlet extractor was used to extract fat in a specimen with diethyl ether, and the extract obtained by volatilizing the diethyl ether was used as crude fat and weighed.

Alternatively, an acid decomposition diethyl ether extraction method etc. may be used to quantify crude fat.

<<Crude fiber>>

As a quantitative method for crude fiber, a filtration method was used.

In this method, first, sulfuric acid was added to a specimen, and the mixture was boiled and filtered. Next, an aqueous sodium hydroxide solution was added to the insoluble matter, and the mixture was boiled and filtered. The residue obtained was dried and weighed. Next, the residue was heated, incinerated at 550 to 600°C, and weighed. The amount of crude fiber was determined from the difference in weight before and after heat incineration.

<<Crude ash>>

As a quantitative method for crude ash, a direct incineration method was used.

In this method, a specimen was heated, incinerated at 550 to 600°C, and weighed to determine the amount of crude ash.

<Measurement of particle diameter>

The particle size distribution of the degradation accelerator was measured using a laser diffraction particle diameter distribution measurement apparatus ("SALD-2300" manufactured by Shimadzu Corporation).

In this method, particles of the degradation accelerator dispersed in a dispersion medium such as water were irradiated with a laser beam. Then the pattern of the observed diffraction scattered light was compared with the pattern of diffraction scattered light estimated by computation based on the assumption that the degradation accelerator is a collection of a plurality of spherical particles having different diameters. Specifically, particle diameters and a frequency distribution were computed such that the observed pattern coincided with the estimated pattern. A 50% mass-based cumulative particle size (referred to as a 50% particle diameter or a median diameter) at which the cumulative frequency when the mass of the particles was cumulated from the small particle diameter side was 50% was used as the representative value of the particle diameter.

[Evaluation of biodegradable resin compositions and molded products]

<Biodegradability test>

Each resin composition obtained was formed into a film with a thickness of 200 μm using a hot press forming machine at 170°C and cut into a dumbbell shape conforming to ISO 527-3. A mixture of gardening soil with a moisture content of 20%RH ("Hana to yasai no baiyoudo (potting compost for flowers and vegetables)" manufactured by IRIS OHYAMA Inc.) and compost (an inoculum for a biodegradation test manufactured by Yahata-Bussan Corporation) at a mass ratio of 1:1 was placed in a polyethylene-made container, and the dumbbell-shaped specimen was embedded in the mixture. The container was covered with a lid and left to stand in a thermostatic oven at 28°C for 2 weeks. The change in weight before and after the test in the thermostatic oven was measured, and the rate of change (the ratio of the reduction in mass to the mass before the test) was computed. The obtained rate of change was computed as the rate of change relative to that for the aliphatic polyester-based resin (A) only in Comparative Example I-1 or II-1 and used as a biodegradability improvement rate.

<Tensile properties>

The yield stress and fracture stress of a film-shaped molded product were measured according to JIS K7127 (1999). The larger these values, the better.

<Tear strength>

The Elmendorf tear strength of a film-shaped molded product was measured according to ISO 6383-2 (1983). The larger the value, the better.

<Puncture impact strength>

Twelve holes with a diameter of 50 mm were punched in a film-shaped molded product having a width of 110 mm and a length of 1300 mm with a hemispherical arm having a tip diameter of 25 mm using a punching impact tester manufactured by Toyo Seiki Seisaku-sho, Ltd. to measure the puncture impact strength. The larger the value of the puncture impact strength, the better.

[Biodegradable resin]

In the following Examples and Comparative Examples, the following aliphatic polyester-based resin (A) was used as the biodegradable resin.

> Aliphatic polyester-based resin (A): polybutylene succinate adipate (PBSA)
> Product name: BioPBS™ FD92PB manufactured by PTT MCC Biochem
> Melting point: 89°C

[Production of degradation accelerators I and comparative degradation accelerators]

Each of the raw materials was pulverized using a "CRUSH MILLSER" (IFM-C20G manufactured by Iwatani Corporation), sieved through a 100 mesh sieve (mesh size: 150 μM), and dried at 80°C in a dryer for 8 hours.
Table 1 shows the contents (% by mass) of nitrogen, carbon, cellulose, lignin, and hemicellulose in each raw material, the nitrogen/carbon ratio, and the hemicellulose/(cellulose + lignin) ratio.

[Table 1]

| | Content of element (% by mass) | | Content of component (% by mass) | | | Nitrogen/ carbon ratio | Hemicellulose/ (cellulose + lignin) ratio | Remarks |
|---|---|---|---|---|---|---|---|---|
| | Nitrogen | Carbon | Hemicellulose | Cellulose | Lignin | | | |
| Parched bran | 2.70 | 48.4 | 14.0 | 7.6 | 4.4 | 0.056 | 1.17 | Inventive Example |
| Wheat bran | 2.80 | 45.0 | 25.9 | 10.9 | 3.4 | 0.062 | 1.81 | Inventive Example |
| Soybean meal | 8.40 | 46.6 | 2.9 | 7.1 | 0.3 | 0.180 | 0.39 | Inventive Example |
| Poplar wood flour | 0.32 | 50.0 | 20.5 | 44.7 | 24.3 | 0.006 | 0.30 | Com parative Example |
| Corncob powder | 0.60 | 44.9 | 34.3 | 42.7 | 17.5 | 0.013 | 0.57 | Com parative Example |
| Cellulose powder | 0.00 | 44.4 | 0.0 | 100.0 | 0.0 | 0.000 | 0.00 | Com parative Example |
| Cedar wood flour | 0.05 | 50.3 | 19.1 | 47.3 | 33.0 | 0.001 | 0.24 | Com parative Example |

[Examples I-1 to I-3 and Comparative Examples I-1 to I-5]

The aliphatic polyester-based resin (A) and one of the degradation accelerators were blended at a ratio shown in Table 2 and melt-kneaded at 170°C in a nitrogen atmosphere for 4 minutes using a compact twin screw kneader ("Xplore Micro 15cc Twin Screw Compounder" manufactured by DSM).

Each of the resin compositions was subjected to the biodegradation test described above, and the results are shown in Table 2.

[Table 2]

| | | Example I-1 | Example I-2 | Example I-3 | Comparative Example I-1 | Comparative Example I-2 | Comparative Example I-3 | Comparative Example I-4 | Comparative Example I-5 |
|---|---|---|---|---|---|---|---|---|---|
| Composition of resin composition (parts by mass) | Aliphatic polyester-based resin (A) | 100 | 100 | 100 | 100 | 100 | 100 | 100 | 100 |
| | Parched bran | 25 | - | - | - | - | - | - | - |
| | Wheat bran | - | 25 | - | - | - | - | - | - |
| | Soybean meal | - | - | 25 | - | - | - | - | - |
| | Poplar wood flour | - | - | - | - | 25 | - | - | - |
| | Corncob powder | - | - | - | - | - | 25 | - | - |
| | Cellulose powder | - | - | - | - | - | - | 25 | - |
| | Cedar wood flour | - | - | - | - | - | - | - | 25 |
| Biodegradability improvement rate | | 10.96 | 6.08 | 4.20 | 1.00 | 2.75 | 1.34 | 0.92 | 0.77 |

As can be seen from Table 2, with the degradation accelerators I of the invention having a nitrogen/carbon ratio and a hemicellulose/(cellulose + lignin) ratio within prescribed ranges, the biodegradability of the biodegradable resin can be significantly improved.

[Production of degradation accelerators II and comparative degradation accelerators]

Each raw material was pulverized using a "CRUSH MILLSER" (IFM-C20G manufactured by Iwatani Corporation), sieved through a 100 mesh sieve (mesh size: 150 μm), and dried at 80°C in a dryer for 8 hours.

Table 3 shows the contents (% by mass) of nitrogen free extract, cellulose, and lignin and the total content of cellulose and lignin for each raw material.

[Table 3]

|  | Nitrogen free extract (% by mass) | Cellulose (% by mass) | Lignin (% by mass) | Cellulose + lignin (% by mass) | Remarks |
|---|---|---|---|---|---|
| Rice bran | 43.4 | 7.6 | 4.4 | 12.0 | Inventive Example |
| Wheat bran | 60.2 | 10.9 | 3.4 | 14.3 | Inventive Example |
| Rapeseed meal | 36.2 | 14.3 | 6.9 | 21.2 | Inventive Example |
| Corncob powder | 57.3 | 42.7 | 17.5 | 60.2 | Com parative Example |
| Cedar wood flour | 0.1 | 47.3 | 33.0 | 80.3 | Com parative Example |
| Cellulose powder | 0.0 | 100.0 | 0.0 | 100.0 | Com parative Example |

[Examples II-1 to II-3 and Comparative Examples II-1 to II-4]

The aliphatic polyester-based resin (A) and one of the degradation accelerators were blended at a ratio shown in Table 4 and melt-kneaded at 170°C in a nitrogen atmosphere for 4 minutes using a compact twin screw kneader ("Xplore Micro 15cc Twin Screw Compounder" manufactured by DSM).

Each of the resin compositions was subjected to the biodegradation test described above, and the results are shown in Table 4.

[Table 4]

| | | Example II-1 | Example II-2 | Example II-3 | Comparative Example II-1 | Comparative Example II-2 | Comparative Example II-3 | Comparative Example II-4 |
|---|---|---|---|---|---|---|---|---|
| Composition of resin composition (parts by mass) | Aliphatic polyester-based resin (A) | 100 | 100 | 100 | 100 | 100 | 100 | 100 |
| | Rice bran | 25 | - | - | - | - | - | - |
| | Wheat bran | - | 25 | - | - | - | - | - |
| | Rapeseed meal | - | - | 25 | - | - | - | - |
| | Corncob powder | - | - | - | - | 25 | - | - |
| | Cedar wood flour | - | - | - | - | - | 25 | - |
| | Cellulose powder | - | - | - | - | - | - | 25 |
| Biodegradability improvement rate | | 8.47 | 6.08 | 3.07 | 1.00 | 1.34 | 0.77 | 0.82 |

As can be seen from Table 4, with the degradation accelerators II of the invention having a nitrogen free extract content, a cellulose content, and a lignin content within prescribed ranges, the biodegradability of the biodegradable resin can be significantly improved.

[Production of degradation accelerators]

<Wheat bran with 50% mass-based cumulative particle size of 56 $\mu$m>

Coarsely pulverized wheat bran (manufactured by Showa Sangyo Co., Ltd.) was dried at 80°C for 8 hours to produce wheat bran with a 50% mass-based cumulative particle size of 56 $\mu$m.

<Wheat bran with 50% mass-based cumulative particle size of 35 $\mu$m>

Coarsely pulverized wheat bran (manufactured by Showa Sangyo Co., Ltd.) was dried at 80°C for 8 hours to produce wheat bran with a 50% mass-based cumulative particle size of 35 $\mu$m.

<Wheat bran with 50% mass-based cumulative particle size of 9 $\mu$m>

Unpulverized wheat bran (manufactured by Showa Sangyo Co., Ltd.) was pre-pulverized using a cutter mill so as to pass through a sieve with a mesh size of 500 $\mu$m, finely pulverized using a jet mill pulverizer ("Nano Jetmizer NJ-50" manufactured by Aishin Nano Technologies CO., LTD.) under the conditions of an air pressure of 1.4 MPa and a processing speed of 60 g/h, and then dried at 80°C for 8 hours to produce wheat bran with a 50% mass-based cumulative particle size of 9 $\mu$m.

The moisture content of each of the wheat bran samples with 50% mass-based cumulative particle sizes of 56 $\mu$m, 35 $\mu$m, and 9 $\mu$m before drying was 8.2% by mass, and the moisture content after drying was 2.3% by mass.

[Examples III-1 to III-3]

11.1 Parts by mass of one of the above-obtained wheat bran samples having 50% mass-based cumulative particle sizes of 56 $\mu$m, 35 $\mu$m, and 9 $\mu$m and used as the degradation accelerators was blended with 100 parts by mass of the aliphatic polyester-based resin (A), and the mixture was melt-kneaded at 170°C in a nitrogen atmosphere for 4 minutes using a compact twin screw kneader ("Xplore Micro 15cc Twin Screw Compounder" manufactured by DSM).

Each of the obtained resin compositions was formed into a film with a thickness of about 120 $\mu$m at 170°C using a hot press forming machine. Test pieces having shapes defined in respective test specifications were cut from the sheet, and the yield stress, the fracture stress, the Elmendorf tear strength, and the puncture impact strength were evaluated. The results are shown in Table 5.

[Table 5]

| | | Unit | Example III-1 | Example III-2 | Example III-3 |
|---|---|---|---|---|---|
| Particle diameter | 50% mass-based cumulative particle size | $\mu$m | 56 | 35 | 9 |
| Physical properties | Yield stress | MPa | 11.6 | 12.7 | 14.7 |
| | Fracture stress | MPa | 8.4 | 11.7 | 12.3 |
| | Elmendorf tear strength | N/mm | 4.4 | 5.0 | 7.3 |
| | Puncture impact strength | J/m | $1.3 \times 10^3$ | $1.3 \times 10^3$ | $3.0 \times 10^3$ |

As can be seen from Table 5, as the 50% mass-based cumulative particle size decreases, the mechanical properties of the biodegradable resin molded product improve.

Although the present invention has been described in detail with reference to particular embodiments, it will be apparent to those skilled in the art that various modifications may be made therein without departing from the spirit and scope of the present invention.

The present application is based on Japanese Patent Applications No. 2019-238580 and No. 2019-238581 filed on December 27, 2019, which are incorporated herein by reference in its entirety.

**Claims**

1. A degradation accelerator for biodegradable resins, the degradation accelerator comprising: cellulose; hemicellulose; and lignin, wherein the mass ratio of nitrogen to carbon in the degradation accelerator for biodegradable resins is 0.04 or more, and wherein the mass ratio of the content of the hemicellulose to the total content of the cellulose and the lignin is 0.2 or more.

2. A degradation accelerator for biodegradable resins, the degradation accelerator comprising 20% by mass or more of nitrogen free extract, wherein the total content of cellulose and lignin is 50% by mass or less.

3. The degradation accelerator for biodegradable resins according to claim 1 or 2, wherein the content of moisture is less than 5% by mass.

4. A biodegradable resin composition comprising: from 2 parts by mass to 250 parts by mass inclusive of the degradation accelerator for biodegradable resins according to any one of claims 1 to 3; and 100 parts by mass of a biodegradable resin.

5. The biodegradable resin composition according to claim 4, wherein the biodegradable resin is at least one selected from the group consisting of an aliphatic polyester-based resin (A), an aliphatic-aromatic polyester-based resin (B), and an aliphatic oxycarboxylic acid-based resin (C).

6. The biodegradable resin composition according to claim 5, wherein the aliphatic polyester-based resin (A) contains, as main constituent units, a repeating unit derived from an aliphatic diol and a repeating unit derived from an aliphatic dicarboxylic acid.

7. The biodegradable resin composition according to claim 5 or 6, wherein the aliphatic-aromatic polyester-based resin (B) contains, as main constituent units, a repeating unit derived from an aliphatic diol, a repeating unit derived from an aliphatic dicarboxylic acid, and a repeating unit derived from an aromatic dicarboxylic acid.

8. A biodegradable resin molded product that is an extrusion molded product or an injection molded product of the biodegradable resin composition according to any one of claims 4 to 7.

9. A method for producing a degradation accelerator for biodegradable resins, the method comprising: pulverizing a raw material to obtain a powder; and selecting grains with a prescribed grain size from the powder to thereby obtain a degradation accelerator for biodegradable resins.

10. The method for producing a degradation accelerator for biodegradable resins according to claim 9, the method further comprising the step of drying.

11. The method for producing a degradation accelerator for biodegradable resins according to claim 9 or 10, wherein the degradation accelerator for biodegradable resins contains cellulose, hemicellulose, and lignin, wherein the mass ratio of nitrogen to carbon in the degradation accelerator for biodegradable resins is 0.04 or more, and wherein the mass ratio of the content of the hemicellulose to the total content of the cellulose and the lignin is 0.2 or more.

12. The method for producing a degradation accelerator for biodegradable resins according to any one of claims 9 to 11, wherein the degradation accelerator for biodegradable resins contains 20% by mass or more of nitrogen free extract, and wherein the total content of cellulose and lignin is 50% by mass or less.

**INTERNATIONAL SEARCH REPORT**

International application No.

PCT/JP2020/035289

A. CLASSIFICATION OF SUBJECT MATTER
C08L 1/02(2006.01)i; C08L 67/00(2006.01)i; C08L 97/00(2006.01)i; C08L 101/16(2006.01)i; C08G 63/16(2006.01)i
FI: C08L1/02; C08L97/00; C08L67/00; C08G63/16; C08L101/16

According to International Patent Classification (IPC) or to both national classification and IPC

B. FIELDS SEARCHED

Minimum documentation searched (classification system followed by classification symbols)
C08L1/02; C08L67/00; C08L97/00; C08L101/16; C08G63/16

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2017-2206 A (IDEMITSU KOSAN CO., LTD.) 05 January 2017 (2017-01-05) | 1-12 |
| A | JP 2009-19200 A (KYOTO UNIVERSITY) 29 January 2009 (2009-01-29) | 1-12 |
| A | JP 2012-158707 A (HITACHI CHEMICAL INDUSTRY CO., LTD.) 23 August 2012 (2012-08-23) | 1-12 |
| A | JP 11-166055 A (SHOKUHIN SANGYO KANKYO HOZEN GIJUTSU KENKYU KUMIAI) 22 June 1999 (1999-06-22) | 1-12 |
| A | JP 2016-500558 A (XYLECO, INC.) 14 January 2016 (2016-01-14) | 1-12 |
| A | JP 2009-538388 A (ELSAM KRAFT A/S) 05 November 2009 (2009-11-05) | 1-12 |

☒ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
12 November 2020 (12.11.2020)

Date of mailing of the international search report
24 November 2020 (24.11.2020)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No.

PCT/JP2020/035289

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-50359 A (MUSASHINO CHEMICAL LABORATORY, LTD.) 17 March 2011 (2011-03-17) | 1-12 |
| A | KR 10-2009-0065428 A (KONKUK UNIVERSITY INDUSTRIAL COOPERATION CORP.) 22 June 2009 (2009-06-22) | 1-12 |

Form PCT/ISA/210 (continuation of second sheet) (January 2015)

## INTERNATIONAL SEARCH REPORT
Information on patent family members

International application No.

PCT/JP2020/035289

| Patent Documents referred in the Report | Publication Date | Patent Family | Publication Date |
|---|---|---|---|
| JP 2017-2206 A | 05 Jan. 2017 | US 2018/0179369 A1<br>WO 2016/199923 A1 | |
| JP 2009-19200 A | 29 Jan. 2009 | (Family: none) | |
| JP 2012-158707 A | 23 Aug. 2012 | (Family: none) | |
| JP 11-166055 A | 22 Jun. 1999 | (Family: none) | |
| JP 2016-500558 A | 14 Jan. 2016 | US 2014/0209093 A1<br>WO 2014/059113 A1<br>EP 2888035 A1<br>KR 10-2015-0067143 A<br>CN 104640992 A | |
| JP 2009-538388 A | 05 Nov. 2009 | US 2009/0305355 A1<br>WO 2007/138534 A1<br>EP 2029757 A1 | |
| JP 2011-50359 A | 17 Mar. 2011 | (Family: none) | |
| KR 10-2009-0065428 A | 22 Jun. 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003221423 A
- JP 2004503415 T

- JP 2019238580 A
- JP 2019238581 A

**Non-patent literature cited in the description**

- *J. Bacteriol.*, 1997, vol. 179, 4821